# EUROPEAN PATENT SPECIFICATION

(11) **EP 1 442 814 B1**
(45) Date of publication and mention of the grant of the patent: **18.12.2013**
(21) Application number: 04100321.1
(22) Date of filing: 29.01.2004
(51) Int. Cl.: B23G 5/06

(54) **A threading tap for cutting threads in blind holes and method of manufacture**
Gewindebohrer zum Gewindeschneiden von Sacklöchern und dessen Herstellungsverfahren
Taraud à fileter des trous borgnes et son procédé de fabrication

(30) Priority: 30.01.2003 SE 0300224
(43) Date of publication of application: 04.08.2004
(73) Proprietor: Sandvik Intellectual Property AB, 811 81 Sandviken (SE)
(72) Inventor: Malagnino, Giovanna, 10040, CASELLETTE (to) (IT); Troilo, Roberto, 10149, TORINO (IT)
(74) Representative: Klöfver, Jörgen

(56) References cited:
- EP-A- 0 641 620
- WO-A-02/087813
- US-A- 4 708 542
- US-A1- 2001 028 926

## Description

### BACKGROUND OF THE INVENTION

The present invention relates to a threading tap according to the preamble of claim 1 for cutting threads in blind holes, comprising an elongated body with a central axis and having at a first end a connector portion and at a second end a threading portion, said threading portion being provided with at least one helical thread about the circumference of said body and interconnected flank portions defining a helical flute from the region of said second end towards said first end and interrupting said helical thread.

The invention also relates to a method of the manufacturing such a tap.

Such a tap and such a method is known from EP-A-0 641 620. However, the known taps suffer from the drawback that chips get entangled in the flutes when working in carbon steel, construction steel or stainless steel.

### SUMMARY OF THE INVENTION

The object of the invention is to improve the properties of the tap regarding its threading properties.

This has been achieved by the threading tap as defined in claim 1.

It has also been achieved by a method as defined in claim 14.

Hereby is achieved an improved chip evacuation from the blind hole towards the first end of the tap.

The method includes forming a threading portion at said second end by forming at least one thread about the circumference of said body extending from the region of said second end towards said first end, said thread being interrupted by said flute and coating said thread by physical vapour deposition.

Forming of the flute and steam tempering may be preceded by grinding the flute, thread forming and coating said thread by physical vapour deposition, i.e. the flute is then ground after coating for removal thereof before steam tempering.

Suitably, the helix angle, i.e. the angle of the flute relative to the axis is between 46° and 55°. In particular, the helix angle is between 48° and 50°. Hereby is achieved an even further improved chip evacuation, due to increased room for the chips, such that holes having a depth 3 times deeper than the diameter of the tap can be threaded. Helix angles smaller than 48° may cause less room for chip transportation, whereas helix angles larger than 50° may cause the vertical component of chip speed to be low. The optimal helix angle has proven to be 48°.

Advantageously, the thread is back tapered towards the first end. In particular the angle of said back tapered thread is between 8° and 11°. Hereby is achieved an improved tap feeding during inversion moment, i.e. when the tap is removed from the hole , and furthermore a reduced absorbed torque.

Preferably, the rake angle of the thread is between 8° and 16°.

Suitably, the body is made of a high-speed steel. In particular, the high-speed steel has a hardness of 63,5 - 66,5 HRC Hereby, an inexpensive tap is achieved. Alternatively, a powder steel material having a hardness of 64,5 - 67,5 HRC may be used.

The thread is coated by physical vapour deposition coating. In particular, the coating comprises either of TiCN, TiN, TiAlN, TiA1CN and CrN. Alternatively, a multi-layer coating such as a combination of TiAlN and WC/C (tungsten carbide/carbon, having a low hardness and low friction coefficient) may be used. Hereby, extended life of the threads is achieved. It should be noted that the flutes are not coated by such a material, since this would cause wider and more irregular chips that get entangled in the flutes. Best performance on work-pieces made of on carbon and construction steel is achieved by use of TiAlN, whereas on stainless steel, best performance is achieved by a the above mentioned multi-layer coating of TiAlN and WC/C.

Suitably, three flutes are distributed substantially evenly about the circumference of the body. Hereby is achieved an optimal chip removal for a diameter range of the tap of 3 to 16 mm. For diameter ranges of 16 to 20 mm, the best performance is achieved with four flutes distributed substantially evenly about the circumference of the body.

### DRAWING SUMMARY

In the following the invention will be described in more detail with reference to the accompanying drawings, in which
Figure 1 is a perspective view of a threading tap comprising three flutes,
Figure 2 is a side view of the threading tap shown in Figure 1,
Figure 3 is a cross-section along the line III-III in Figure 2,
Figure 4 is a perspective view of a threading tap comprising four flutes, and
Figure 5 is a side view of the threading tap shown in Figure 4.

### DETAILED DESCRIPTION

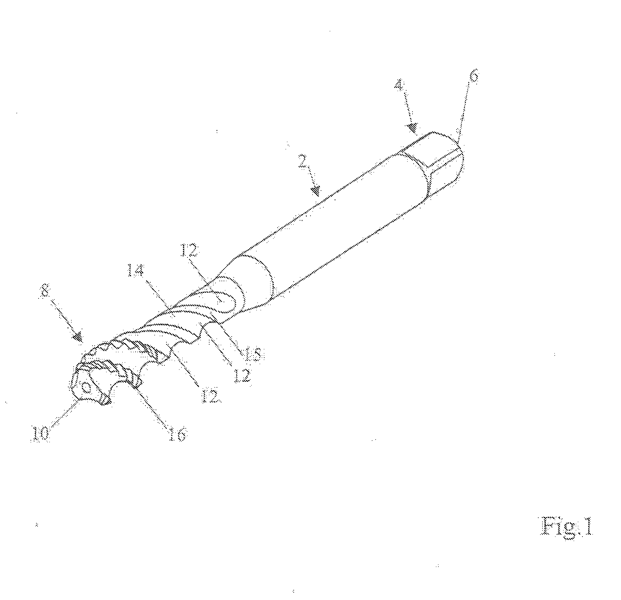

Figure 1 shows a first embodiment of a tap having an elongated body 2 with a connector portion 4 at a first end 6, and a threading portion 8 at a second end 10. At the threading portion 8, three helical flutes 12 are defined by flanks 14. The flanks 14 are at the periphery defined by the threading portion 8 at the second end 10, however by a non-threaded, substantially flat portion 15 closer to the first end 6. The threading portion 8 is provided with a helical thread 16 about the circumference of the body, and is interrupted by the flutes 12.

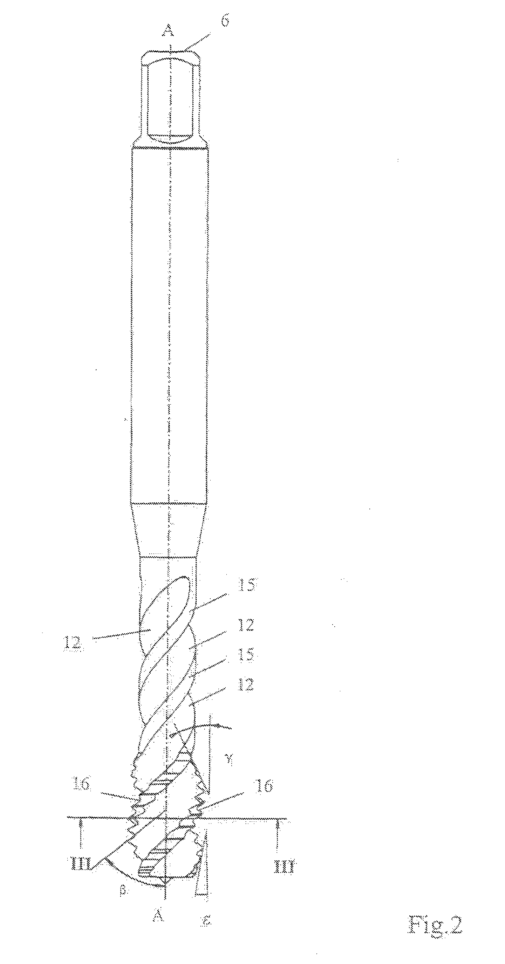

In figure 2, a central axis A-A is shown. A helix angle β is shown as the angle between the extension of a flute and the axis A-A. Furthermore is shown how the threading portion 8 has a first chamfer portion having an increasing angle ε from the end 10 towards a central portion.

The central portion has a substantially constant outer diameter a predetermined distance parallel to the central axis. The threading portion ends with a second chamfer portion having a back taper angle γ directed towards the non-threaded portion 15 of flanks 14.

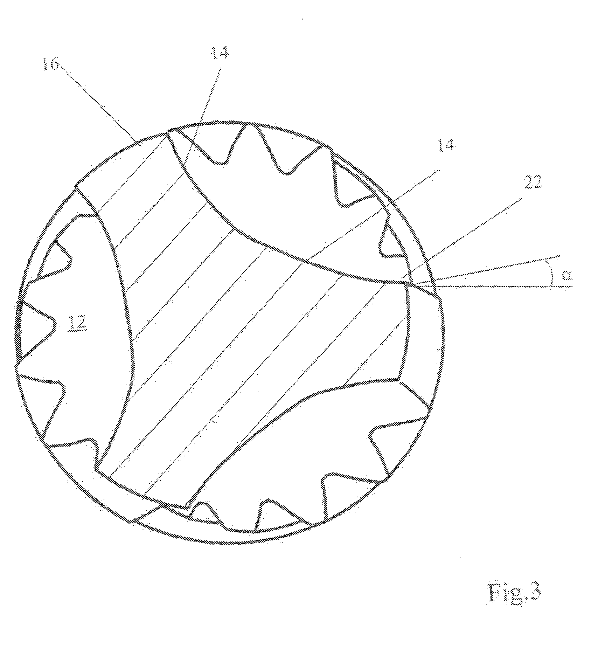

In figure 3 are shown the flutes 12, the flanks 14 and the thread 16.

An edge 22 is provided where one of the flanks and the thread 16 meet. The edge 22 has a rake angle α.

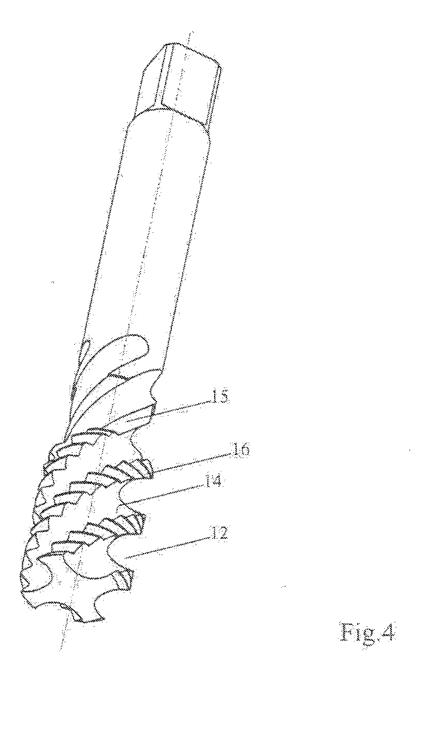

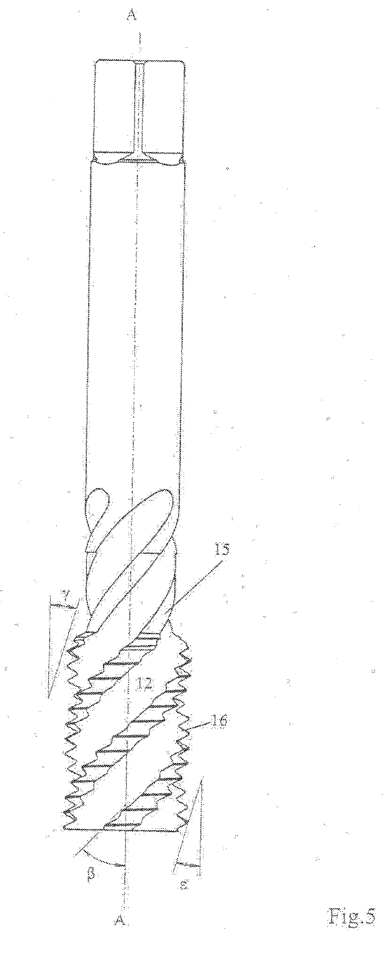

Figures 4 - 5 show a tap according to a second embodiment having four flutes 12 defined by four flanks 14.

Regarding both embodiments described above, it is desirable to achieve extended life of the thread. This is performed by coating the thread by a physical vapour deposition coating (PVD), such as TiCN, TiN, TiAlN, TiA1CN or CrN., or a multi-layer coating such as a combination of TiAlN and WC/C (tungsten carbide/carbon, having a low hardness and low friction coefficient), named as TiA1N/WC/C.

However, it has turned out that it is disadvantageuos to apply such a coating in the flutes, i.e. on the flanks, since the chips created are wide and irregular.

By use of non-treated or steam tempered flutes, narrower and more regular chips are achieved compared to what is the case when using fully coated taps. By steam tempering the flutes, the wear resistance of the flutes is improved compared to non-treated flutes.

During manufacture of the tap, the flutes are ground in a blank, the whole piece is steam tempered with nitrogen (N₂) and carbon dioxide (CO₂) or with nitrogen (N₂) and water steam (H₂O) at 500°C to 540°C. Steam tempering causes a black or blue oxidation layer on the tap surface. Then the thread is ground and thereafter the chamfer portions and the back tapered portion are ground. Thus, the black or blue surface caused by steam tempering will remain only in the flutes, i.e. on the flanks. Thereafter, the tap is applied with PVD, which will stick to the ground surfaces, i.e. to the thread, to the chamfer and to the back tapered portion, however not to the steam tempered flanks.

An alternative way of manufacturing the tap is to first grind the flutes, then the threads and then the chamfer portions and the back tapered portions, and thereafter to perform the PVD coating. Thereafter, the flutes are reground and steam tempered. It should be noted that steam tempering does not affect the PVD coating regarding TiAlN, TiN, CrN, TiAlN/WC/C and TiAlCN, because their oxidation temperature is higher than the steam tempering process temperature.

The flute shown in figures 1-3 has an optimal chip removal for a diameter range of the tap of 3 to 16 mm, whereas for diameter ranges of 16 to 20 mm, the best performance is achieved with the tap shown in figures 4 - 5.

In the embodiments above, the taps have been shown as right hand taps. The rake angle α of course relates *mutatis mutandis* to left hand taps.

Furthermore, only one interrupted thread 16 has been shown in the embodiments above, of course, two or more parallel threads may be provided, e.g. multi-start taps.

Of course, more than four flutes may be provided.

## Claims

1. A threading tap for cutting threads in blind holes, comprising an elongated body (2) with a central axis (A-A) and having at a first end (6) a connector portion (4) and at a second end (10) a threading portion (8), said threading portion being provided with at least one helical thread (16) about the circumference of said body and interconnected flank portions (14) defining at least one helical flute (12) from the region of said second end (10) towards said first end (6) and interrupting said helical thread (16), **characterised in that** the flank portions (14) are steam tempered, and said thread is coated by physical vapour deposition coating.

2. A threading tap according to claim 1, wherein the helix angle (β) of the flute (12) relative to said axis (A-A) is between 46° and 55°.

3. A threading tap according to claim 1 or 2, wherein the helix angle (β) is between 48° and 50°.

4. A threading tap according to any one of claims 1 to 3, wherein the helix angle (β) is 48°.

5. A threading tap according to any one of the preceding claims, wherein the thread (16) is tapered towards the first end (6).

6. A threading tap according to claim 5, wherein the angle (γ) of said tapered thread is between 8° and 11°.

7. A threading tap according to anyone of the preceding claims, wherein the rake angle (α) of the thread (16) is between 8° and 16°.

8. A threading tap according to any one of the preceding claims, wherein the body is made of a high-speed steel.

9. A threading tap according to claim 8, wherein said high-speed steel has a hardness of 63,5 - 66,5 HRC.

10. A threading tap according to any one of claims 1 to 7, wherein the body is made of a powder steel material having a hardness of 64,5 - 67,5 HRC

11. A threading tap according to claim 1, wherein said coating comprises either of TiCN, TiN, TiAlN, TiAlCN, CrN, and TiAlN/WC/C.

12. A threading tap according to any one of the preceding claims, wherein three flutes (12) are distributed substantially evenly about the circumference of the body.

13. A threading tap according to any one of claims 1 to 11, wherein four flutes (12) are distributed substantially evenly about the circumference of the body.

14. A method of manufacturing a threading tap suitable for cutting threads in blind holes, including the following steps
- selecting a blank comprising an elongated body (2) having a first end (6) and a second end (10) and a central axis (A-A),
- forming at least one helical flute (12) extending from the region of said second end towards said first end, said flute (12) being defined by interconnected flank portions (14),
- steam tempering said flank portions (14), and forming a threading portion (8) at said second end (10) by forming at least one thread (16) about the circumference of said body extending from the region of said second end towards said first end (6), said thread being interrupted by said flute (12), and coating said thread (16) by physical vapour deposition.

15. A method according to claim 14, including selecting a material for performing said physical vapour deposition from either of TiCN, TiN, TiAIN, TiAlCN, CrN and TiAlN/WC/C.

16. A method according to claim 14 or 15, including forming at least three flutes (12) substantially evenly about the circumference of the body.

17. A method according to any one of claims 14 to 16, including forming the flute (12) such that the angle of the flute relative to said axis (A-A) is between 46° and 55°.

18. A method according to any one of claims 14 to 17 including forming the flute (12) such that the angle of the flute relative to a plane perpendicular to said axis (A-A) is between 48° and 50°.

19. A method according to any one of claims 14 to 18, including forming the flute (12) such that the angle of the flute (12) relative to said axis (A-A) is 48°.

20. A method according to any one of claims 14 to 19 including forming the thread (16) such that it is tapered towards the first end (6).

21. A method according to claim 20, including forming the thread (16) such that the angle (γ) of the tapered thread is between 8° and 11°.

22. A method according to any one of claims 14 to 21, including forming a rake angle (α) of the thread (16) within the range of 8° and 16°.

23. A method according to any one of claims 14 to 22, including forming a connector portion (4) at said first end (6) of the body (2).

24. A method according to any one of claims 14 to 23, including selecting said blank from a high-speed steel having a hardness of 63,5 - 66,5 HRC.

25. A method according to any one of claims 14 to 23, including selecting said blank from a powder steel having a hardness of 64,5 - 67,5 HRC

26. A method according to any one of claims 14 to 25, wherein steam tempering is performed at a temperature between 500°C and 540°C.

27. A method according to any one of claims 14 to 26, wherein steam tempering is performed with nitrogen (N₂) and carbon dioxide (CO₂).

28. A method according to any one of claims 14 to 26, wherein steam tempering is performed with nitrogen (N₂) and water steam (H₂O).

## Patentansprüche

1. Gewindeschneider zum Gewindeschneiden in Sacklöchern, welcher einen länglichen Körper (2) mit einer zentralen Achse (A-A) umfasst und an einem ersten Ende (6) einen Verbindungsabschnitt (4) besitzt und an einem zweiten Ende (10) einen gewindeschneidenden Abschnitt (8), wobei der gewindeschneidende Abschnitt mit zumindest einem spiralförmig um den Umfang des Körpers herum verlaufenden Gewinde (16) versehen ist und mit miteinander verbundenen Flankenabschnitten (14), die zumindest eine spiralförmig von dem Abschnitt des zweiten Endes (10) in Richtung auf das erste Ende (6) zu verlaufende Nut (12) definieren und das spiralförmige Gewinde (16) unterbrechen, **dadurch gekennzeichnet, dass** die Flankenabschnitte (14) mittels Dampf angelassen sind und das Gewinde mit einer Beschichtung durch physikalische Gasphasenabscheidung beschichtet ist.

2. Gewindeschneider nach Anspruch 1, wobei der Steigungswinkel (β) der Nut (12) relativ zu der Achse (A-A) zwischen 46° und 55° beträgt.

3. Gewindeschneider nach Anspruch 1 oder 2, wobei der Steigungswinkel (β) zwischen 48° und 50° beträgt.

4. Gewindeschneider nach einem der Ansprüche 1 bis 3, wobei der Steigungswinkel (β) 48° beträgt.

5. Gewindeschneider nach einem der vorangehenden Ansprüche, wobei das Gewinde (16) sich in Richtung auf das erste Ende (6) zu verjüngt.

6. Gewindeschneider nach Anspruch 5, wobei der Winkel (γ) des sich verjüngenden Gewindes zwischen 8° und 11° beträgt.

7. Gewindeschneider nach einem der vorangehenden Ansprüche, wobei der Spanwinkel (α) des Gewindes (16) zwischen 8° und 16° beträgt.

8. Gewindeschneider nach einem der vorangehenden Ansprüche, wobei der Körper aus Hochgeschwindigkeitsstahl hergestellt ist.

9. Gewindeschneider nach Anspruch 8, wobei der Hochgeschwindigkeitsstahl eine Härte von 63,5 - 66,5 HRC besitzt.

10. Gewindeschneider nach einem der Ansprüche 1 bis 7, wobei der Körper aus einem Pulverstahlmaterial hergestellt ist, welches eine Härte von 64,5 - 67,5 HRC besitzt.

11. Gewindeschneider nach Anspruch 1, wobei die Beschichtung TiCN, TiN, TiAlN, TiAlCN, CrN oder TiAlN/WC/C umfasst.

12. Gewindeschneider nach einem der vorangehenden Ansprüche, wobei drei Nuten (12) im Wesentlichen gleichmäßig um den Umfang des Körpers herum verteilt sind.

13. Gewindeschneider nach einem der Ansprüche 1 bis 11, wobei vier Nuten (12) im Wesentlichen gleichmäßig um den Umfang des Körpers herum verteilt sind.

14. Verfahren zum Herstellen eines Gewindeschneiders, der geeignet ist zum Gewindeschneiden in Sacklöchern, welches die folgenden Schritte umfasst
- Auswählen eines Rohlings, welcher einen länglichen Körper (2) umfasst, der ein erstes Ende (6) und ein zweites Ende (10) und eine zentrale Achse (A-A) besitzt,
- Ausbilden zumindest einer spiralförmigen Nut (12), welche sich von dem Bereich des zweiten Endes aus in Richtung auf das erste Ende zu erstreckt, wobei die Nut (12) durch miteinander verbundene Flankenabschnitte (14) definiert wird,
- Anlassen der Flankenabschnitte (14) mittels Dampf und Ausbilden eines Gewindeabschnitts (8) an dem zweiten Ende (10) mittels Ausbilden zumindest eines Gewindes (16) um den Umfang des Körpers herum, welches sich von dem Bereich des zweiten Endes aus in Richtung auf das erste Ende (6) zu erstreckt, wobei das Gewinde durch die Nut (12) unterbrochen wird, und Beschichten des Gewindes (16) mittels physikalischer Gasphasenabscheidung.

15. Verfahren nach Anspruch 14, welches ein Auswählen von einem Material zum Ausführen der physikalischen Gasphasenabscheidung aus TiCN, TiN, TiAlN, TiAlCN, CrN oder TiAlN/WC/C umfasst.

16. Verfahren nach Anspruch 14 oder 15, welches ein Ausbilden von zumindest drei Nuten (12) im Wesentlichen gleichmäßig um den Umfang des Körpers herum umfasst.

17. Verfahren nach einem der Ansprüche 14 bis 16, welches ein Ausbilden der Nut (12) umfasst, sodass der Winkel der Nut relativ zu der Achse (A-A) zwischen 46° und 55° beträgt.

18. Verfahren nach einem der Ansprüche 14 bis 17, welches ein Ausbilden der Nut (12) umfasst, sodass der Winkel der Nut relativ zu einer Ebene, die senkrecht zu der Achse (A-A) verläuft, zwischen 48° und 50° beträgt.

19. Verfahren nach einem der Ansprüche 14 bis 18, welches ein Ausbilden der Nut (12) umfasst, sodass der Winkel der Nut (12) relativ zu der Achse (A-A) 48° beträgt.

20. Verfahren nach einem der Ansprüche 14 bis 19, welches ein Ausbilden des Gewindes (16) umfasst, sodass es sich in Richtung auf das erste Ende (6) zu verjüngt.

21. Verfahren nach Anspruch 20, welches ein Ausbilden des Gewindes (16) umfasst, sodass der Winkel (γ) des sich verjüngenden Gewindes zwischen 8° und 11° beträgt.

22. Verfahren nach einem der Ansprüche 14 bis 21, welches ein Ausbilden eines Spanwinkels (α) des Gewindes (16) innerhalb des Bereichs von 8° und 16° umfasst.

23. Verfahren nach einem der Ansprüche 14 bis 22, welches ein Ausbilden eines Verbindungsabschnitts (4) an dem ersten Ende (6) des Körpers (2) umfasst.

24. Verfahren nach einem der Ansprüche 14 bis 23, welches ein Auswählen des Rohlings aus einem Hochgeschwindigkeitsstahl umfasst, welcher eine Härte von 63,5 - 66,5 HRC besitzt.

25. Verfahren nach einem der Ansprüche 14 bis 23, welches ein Auswählen des Rohlings aus einem Pulverstahl umfasst, welcher eine Härte von 64,5 - 67,5 HRC besitzt.

26. Verfahren nach einem der Ansprüche 14 bis 25, wobei ein Anlassen mittels Dampf bei einer Temperatur zwischen 500° C und 540° C ausgeführt wird.

27. Verfahren nach einem der Ansprüche 14 bis 26, wobei ein Anlassen mittels Dampf mit Stickstoff (N₂) und Kohlendioxid (CO₂) ausgeführt wird.

28. Verfahren nach einem der Ansprüche 14 bis 26, wobei ein Anlassen mittels Dampf mit Stickstoff (N₂) und Wasserdampf (H₂O) ausgeführt wird.

## Revendications

1. Taraud à fileter pour la réalisation de taraudages dans des trous borgnes, comprenant un corps allongé (2) avec un axe central (A-A) et ayant au niveau d'une première extrémité (6), une partie de connecteur (4) et au niveau d'une seconde extrémité (10), une partie de filetage (8), ladite partie de filetage étant prévue avec au moins un filetage hélicoïdal (16) autour de la circonférence dudit corps et des parties de flanc interconnectées (14) définissant au moins une cannelure hélicoïdale (12) à partir de la région de ladite seconde extrémité (10) vers ladite première extrémité (6) et interrompant ledit filetage hélicoïdal (16), **caractérisé en ce que** les parties de flanc (14) sont revenues à la vapeur, et ledit filetage est recouvert par un revêtement réalisé par dépôt physique en phase vapeur.

2. Taraud à fileter selon la revendication 1, dans lequel l'angle d'hélice (β) de la cannelure (12) par rapport audit axe (A-A) est compris entre 46° et 55°.

3. Taraud à fileter selon la revendication 1 ou 2, dans lequel l'angle d'hélice (β) est compris entre 48° et 50°.

4. Taraud à fileter selon l'une quelconque des revendications 1 à 3, dans lequel l'angle d'hélice (β) est de 48°.

5. Taraud à fileter selon l'une quelconque des revendications précédentes, dans lequel le filetage (16) est progressivement rétréci vers la première extrémité (6).

6. Taraud à fileter selon la revendication 5, dans lequel l'angle (γ) dudit filetage progressivement rétréci est compris entre 8° et 11°.

7. Taraud à fileter selon l'une quelconque des revendications précédentes, dans lequel l'angle d'inclinaison (α) du filetage (16) est compris entre 8° et 16°.

8. Taraud à fileter selon l'une quelconque des revendications précédentes, dans lequel le corps est réalisé à partir d'un acier rapide.

9. Taraud à fileter selon la revendication 8, dans lequel ledit acier rapide a une dureté de 63,5 - 66,5 HRC.

10. Taraud à fileter selon l'une quelconque des revendications 1 à 7, dans lequel le corps est réalisé à partir d'un matériau d'acier en poudre ayant une dureté de 64,5 - 67,5 HRC.

11. Taraud à fileter selon la revendication 1, dans lequel ledit revêtement comprend l'un parmi TiCN, TiN, TiAlN, TiAlCN, CrN et TiAlN/WC/C.

12. Taraud à fileter selon l'une quelconque des revendications précédentes, dans lequel trois cannelures (12) sont réparties sensiblement régulièrement autour de la circonférence du corps.

13. Taraud à fileter selon l'une quelconque des revendications 1 à 11, dans lequel quatre cannelures (12) sont réparties sensiblement régulièrement autour de la circonférence du corps.

14. Procédé pour fabriquer un taraud à fileter afin de découper des filetages dans des trous borgnes, comprenant les étapes suivantes consistant à:
sélectionner une ébauche comprenant un corps allongé (2) ayant une première extrémité (6) et une seconde extrémité (10) et un axe central (A-A),
former au moins une cannelure hélicoïdale (12) s'étendant à partir de la région de ladite seconde extrémité vers ladite première extrémité, ladite cannelure (12) étant définie par des parties de flanc interconnectées (14),
faire revenir à la vapeur lesdites parties de flanc (14), et
former une partie de filetage (8) au niveau de ladite seconde extrémité (10) en formant au moins un filetage (16) autour de la circonférence dudit corps s'étendant à partir de la région de ladite seconde extrémité vers ladite première extrémité (6), ledit filetage étant interrompu par ladite cannelure (12), et revêtir ledit filetage (16) par dépôt physique en phase vapeur.

15. Procédé selon la revendication 14, comprenant l'étape consistant à sélectionner un matériau pour réaliser ledit dépôt physique en phase vapeur à partir de l'un parmi TiCN, TiN, TiAlN, TiAlCN, CrN et TiAlN/WC/C.

16. Procédé selon la revendication 14 ou 15, comprenant l'étape consistant à former au moins trois cannelures (12) sensiblement régulièrement autour de la circonférence du corps.

17. Procédé selon l'une quelconque des revendications 14 à 16, comprenant l'étape consistant à former la cannelure (12) de sorte que l'angle de la cannelure par rapport audit axe (A-A) est compris entre 46° et 55°.

18. Procédé selon l'une quelconque des revendications 14 à 17, comprenant l'étape consistant à former la cannelure (12) de sorte que l'angle de la cannelure par rapport à un plan perpendiculaire audit axe (A-A) est compris entre 48° et 50°.

19. Procédé selon l'une quelconque des revendications 14 à 18, comprenant l'étape consistant à former la cannelure (12) de sorte que l'angle de la cannelure (12) par rapport audit axe (A-A) est de 48°.

20. Procédé selon l'une quelconque des revendications 14 à 19, comprenant l'étape consistant à former le filetage (16) de sorte qu'il est progressivement rétréci vers la première extrémité (6).

21. Procédé selon la revendication 20, comprenant l'étape consistant à former le filetage (16) de sorte que l'angle (γ) du filetage progressivement rétréci est compris entre 8° et 11°.

22. Procédé selon l'une quelconque des revendications 14 à 21, comprenant l'étape consistant à former un angle d'inclinaison (α) du filetage (16) dans la plage de 8° et 16°.

23. Procédé selon l'une quelconque des revendications 14 à 22, comprenant l'étape consistant à former une partie de connecteur (4) au niveau de ladite première extrémité (6) du corps (2).

24. Procédé selon l'une quelconque des revendications 14 à 23, comprenant l'étape consistant à sélectionner ladite ébauche à partir d'un acier rapide ayant une dureté de 63,5 - 66,5 HRC.

25. Procédé selon l'une quelconque des revendications 14 à 23, comprenant l'étape consistant à sélectionner ladite ébauche à partir d'un acier en poudre ayant une dureté de 64,5 - 67,5 HRC.

26. Procédé selon l'une quelconque des revendications 14 à 25, dans lequel le revenu à la vapeur est réalisé à une température comprise entre 500°C et 540°C.

27. Procédé selon l'une quelconque des revendications 14 à 26, dans lequel le revenu à la vapeur est réalisé avec de l'azote (N₂) et du dioxyde de carbone (CO₂).

28. Procédé selon l'une quelconque des revendications 14 à 26, dans lequel le revenu à la vapeur est réalisé avec de l'azote (N₂) et de la vapeur d'eau (H₂O).
